# EUROPEAN PATENT APPLICATION

(11) **EP 0 991 031 A2**
(43) Date of publication of application: **05.04.2000**
(21) Application number: 99118969.7
(22) Date of filing: 27.09.1999
(51) Int. Cl.: G07F 7/00, G07B 15/00

(54) **Vehicle sharing system**

(30) Priority: 30.09.1998 JP 29461298
(71) Applicant: HONDA GIKEN KOGYO KABUSHIKI KAISHA, Minato-ku Tokyo (JP)
(72) Inventor: Ogura, Masami, Wako-shi, Saitama-ken (JP); Mita, Yoshinori, Wako-shi, Saitama-ken (JP); Tatsuta, Masao, Sayama-shi, Saitama-ken (JP); Hamano, Hiroshi, Sayama-shi, Saitama-ken (JP); Urushidani, Shinzou, Sayama-shi, Saitama-ken (JP); Shimizu, Tomohide, Sayama-shi, Saitama-ken (JP); Saibara, Nozomu, Sayama-shi, Saitama-ken (JP); Fujinuma, Michio, Sayama-shi, Saitama-ken (JP); Uehara, Takashi, Sayama-shi, Saitama-ken (JP)
(74) Representative: Prechtel, Jörg, Dipl.-Phys. Dr.

(57) **Abstract**

A vehicle sharing system is provided that, in rental places adjacent to various facilities within a leisure facility, enables a user to exchange a plurality of kinds of shared vehicles as required within a short time and without complicated rental processing.

The leisure facilities in which the vehicle sharing system of the present invention is employed comprise; a hotel 1, an amusement facility 2, a museum 3, and a circuit 4. The facilities are scattered over the site with some distance between them. In the hotel 1 a central control apparatus is provided, which supervises the maintenance condition and usage status of shared vehicles collectively. Herein, shared vehicles means those that can be used freely by a plurality of users when not being randomly occupied, without specifying a vehicle for each user. Furthermore, in the neighborhood of each facility are provided vehicle ports in which shared vehicles are to be parked. Herein, vehicle types of shared vehicles that can be parked in each vehicle port are limited dependant on conditions such as the distance between each facility and the width of roads and the like.

## Description

### BACKGROUND OF THE INVENTION

### Field of the Invention

The present invention relates to vehicle sharing systems whereby a plurality of users can share vehicles.

### Description of the Related Art

Heretofore, in leisure facilities and the like, with a plurality of facilities scattered with some distance between each facility, shuttle buses or private cars are used to move around these facilities.

However, when a shuttle bus is used, there is a problem in that the time for the user to move is limited by the time schedule of the shuttle bus.

Alternatively, when a private vehicle is used, there are problems in that the number of users is limited by the number of parking spaces in each facility, and that it is not possible to drive on narrow roads such as natural paths.

Therefore, to move between neighboring facilities within the leisure facilities, where the distance is comparatively small, rental cycles are used.

Furthermore, some leisure facilities rent electric vehicles that can be driven only inside the site, so that visitors can move between the facilities.

However, when renting the above-mentioned rental cycles, there are problems such as the necessity to use a shuttle bus to go to the place to rent rental cycles, and that moving to another facility a long distance away is not possible.

Furthermore, when a user, renting an electric vehicle, wants to change to a rental cycle, the user cannot just leave the electric vehicle, but must go back to the place where the user rented the electric vehicle.

Moreover, similarly, when using both an electric vehicle and a rental cycle alternately as required, there is a disadvantage in that a user has to make a new application each time the user changees rental vehicles.

The present invention has come about under such a background, with the object of providing a system for shared vehicles that, in rental places adjacent to each facility, enables a user to exchange a plurality of kinds of shared vehicle as required within a short time and without complicated rental processing.

### SUMMARY OF THE INVENTION

According to a first aspect of the invention there is provided a vehicle sharing system whereby a plurality of users can share shared vehicles (6a, 6b, 11, 21a, 21b), and is characterized in comprising: an IC (Integrated Circuit) card that functions as a key for shared vehicles (6a, 6b, 11, 21a, 21b); a plurality of vehicle ports in different locations (1a, 2a, 3a, 4a, 4b) that enable parking of one or more kinds of shared vehicle; and a plurality of kinds of shared vehicles (6a, 6b, 11, 21a, 21b) that can be parked in the vehicle ports (1a, 2a, 3a, 4a, 4b) and that can be rented with the IC card.

With the first aspect of the invention, a user rents a shared vehicle with an IC card which is a key to enable the rental of a plurality of kinds of vehicle that can be used in a plurality of vehicle ports.

Therefore, with the vehicle sharing system of the present invention it is possible, by using IC cards, to change between different kinds of shared vehicle as required, in ports where a plurality of kinds of shared vehicles are parked, within a short time and without complicated processing for changing vehicles.

A second aspect of the invention is characterized in that with the vehicle sharing system according to the first aspect, the vehicle sharing system comprises: port terminals (9, 24, 51, 53) provided in the vehicle ports (1a, 2a, 3a, 4a, 4b) for performing rental and return processing of shared vehicles (6a, 6b, 11, 21a, 21b) by using the IC card; and a central control apparatus (50) which is network linked to the port terminals (9, 24, 51, 53), and which obtains information about rental and returning of the shared vehicles (6a, 6b, 11, 21a, 21b) performed at the port terminals and stores the usage status of the shared vehicles (6a, 6b, 11, 21a, 21b).

With the second aspect of the invention, in the vehicle sharing system, the information from the port terminals for the user and for the rental and returning of the shared vehicle is stored in a central control apparatus via a network.

Therefore, the vehicle sharing system of the present invention enables the central control apparatus to capture the shared vehicle user status of the user, in whichever port terminal the user performs the rental and return processing for the shared vehicle. Furthermore, the invention makes it possible to collectively supervise shared vehicles available in vehicle ports, and enables account issue processing in accordance with the shared vehicle usage status of the user.

A third aspect of the invention is characterized in that with the vehicle sharing system according to the second aspect, information of charges for use of shared vehicles (6a, 6b, 11, 21a, 21b) is stored in the IC card or an IC card memory section (50a2) in the central control apparatus (50) each time the rental or return processing for the shared vehicles (6a, 6b, 11, 21a, 21b) is performed in the port terminals (9, 24, 51, 53).

With the third aspect of the invention, charging processing, that is settling of the account, is not performed during the rental and return processing for the shared vehicle at the port terminal, the account being settled when the user returns the IC card.

Therefore, since the account is not settled each time the user changees (re-rents) a shared vehicles, but is settled collectively for the use of shared vehicles when returning the IC card, the rental processing at the port terminals is not complicated.

### BRIEF DESCRIPTION OF THE DRAWINGS

FIG.. 1 shows an example of a facility suitable for the introduction of a vehicle sharing system.
FIG.. 2 shows an example of a vehicle port for parking shared vehicles.
FIG.. 3 shows another example of a vehicle port for parking shared vehicles.
FIG. 4 shows a block diagram of a control system for two wheeled vehicles.
FIG. 5 shows a block diagram of a control system for four wheeled vehicles.
FIG. 6 shows a diagram of a vehicle sharing system network construction.
FIG. 7 shows an example of vehicle data.
FIG. 8 shows an example of IC card data.
FIG. 9 is a flowchart showing the flow from issuing through to returning an IC card.
FIG. 10 is a flowchart for IC card issuing processing.
FIG. 11 is a flowchart for port terminal processing.
FIG. 12 is a flowchart for renting shared vehicles.
FIG. 13 is a flowchart for returning shared vehicles.
FIG. 14 shows an example of a screen display when renting shared vehicles.
FIG. 15 shows an example of a screen display when returning shared vehicles.
FIG. 16 is a flowchart for processing when returning an IC card.

### DETAILED DESCRIPTION OF THE INVENTION

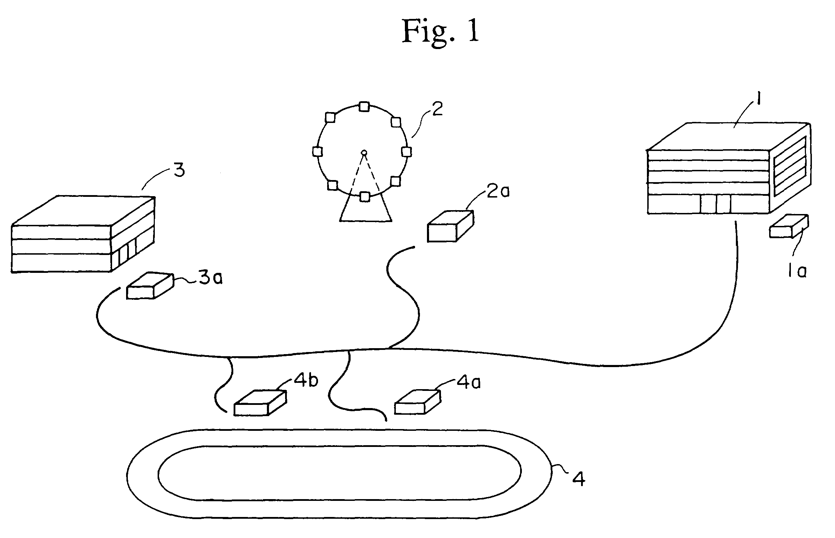

As follows is a description of an embodiment of the present invention with reference to the drawings. FIG. 1 is a schematic diagram showing leisure facilities in which the vehicle sharing system according to one embodiment of the present invention is employed. In this figure the leisure facilities in which the vehicle sharing system of the present invention is employed comprise; a hotel 1, an amusement facility 2, a museum 3, and a circuit 4. The facilities are scattered over the site with some distance between them. In the hotel 1 a central control apparatus is provided, which supervises the maintenance condition and usage status of shared vehicles collectively. Herein, shared vehicles means those that can be used freely by a plurality of users when not being randomly occupied, without specifying a vehicle for each user. For example, the shared vehicles to be used in this embodiment are electric vehicles, cycles and the like.

Furthermore, in the neighborhood of each facility are provided vehicle ports for parking shared vehicles. Herein, vehicle types of shared vehicles that can be parked in each vehicle port are as follows dependent on conditions such as the distance between each facility and the width of roads and the like. In the vehicle port 1a provided in the hotel 1, only electric vehicles can be parked. In the vehicle port 2a provided at the amusement facility 2, electric vehicles and cycles can be parked. In the vehicle port 3a provided at the museum 3, electric vehicles and cycles can be parked. In the vehicle port 4a provided at the circuit 4, only electric vehicles can be parked. In the vehicle port 4b provided at the circuit 4, only cycles can be parked.

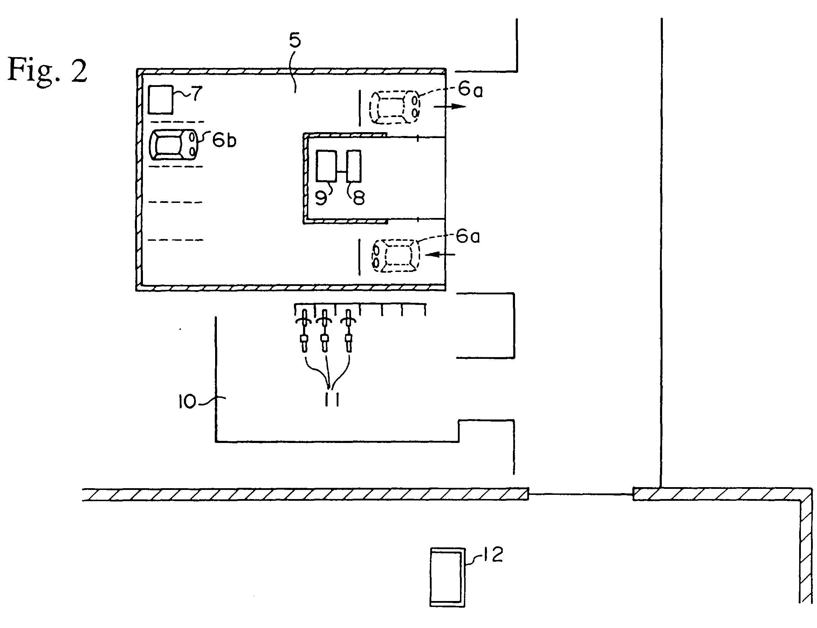

The vehicle ports in FIG. 1 will now be explained with reference to the figures. FIG. 2 shows one example construction of a vehicle port provided at the amusement facility 2 and the museum 3. Numeral 5 denotes a car park for an electric vehicle 6a and an electric vehicle 6b, being one type of shared vehicle, and comprises a battery charger 7, an APS (Auto Parking System) 8 and a port terminal 9. Furthermore, the port terminal 9 and the APS 8 are linked to the central control apparatus in the hotel 1 (FIG. 1) via a LAN (not shown in the figures).

Depending on the types of shared vehicles which can be parked in the vehicle ports, it is possible to move within the leisure facilities using two types of shared vehicles, that is to say, electric vehicles and cycles.

The APS 8 detects the battery charge of the electric vehicle 6a and the electric vehicle 6b, and controls the electric vehicle 6a and the electric vehicle 6b when guiding them to their parking spaces in the car park 5, and when entering and leaving. For example the APS 8, in the case of detecting that the battery charge of the electric vehicle 6a is low, during a moving operation of the electric vehicle 6a, moves the vehicle to a parking space in which the battery charger 7 can charge the battery, and then controls the electric vehicle 6a and the battery charger 7 so as to charge the battery of the electric vehicle 6a.

The port terminal 9 performs the rental and return processing for the electric vehicle 6a and the electric vehicle 6b based on the data of the user stored in the IC cards. Furthermore, during this processing, the port terminal 9 sends the status of the rental and return processing for the electric vehicle 6a and the electric vehicle 6b of the IC card user, to the central control apparatus.

Numeral 10 denotes a cycle park for the exclusive use of cycles, which handles cycles 11, being one type of shared vehicle. The rental and return processing for the cycles 11 is also performed with IC cards in the port terminal 9. Similarly, the port terminal 9, when the rental and return processing for the cycles 11 is performed, sends the status of the rental and return processing for the cycle 11 of the IC card user to the central control apparatus via the LAN (not shown in the figure).

Numeral 12 denotes an IC card processor provided at the amusement facility 2, the museum 3 and the circuit 4. The operator of the card processor 12 performs IC card issuing and return processing with the IC card processor 12.

Furthermore, in the vehicle port 4a of the circuit 4 there is provided the same equipment, namely a car park 5, a battery charger 7, an APS 8 and a port terminal 9, but only electric vehicles can be parked. Moreover, in the vehicle port 4b of the circuit 4 there is provided the same equipment, namely a cycle park 10 and a port terminal 9, but only cycles can be parked.

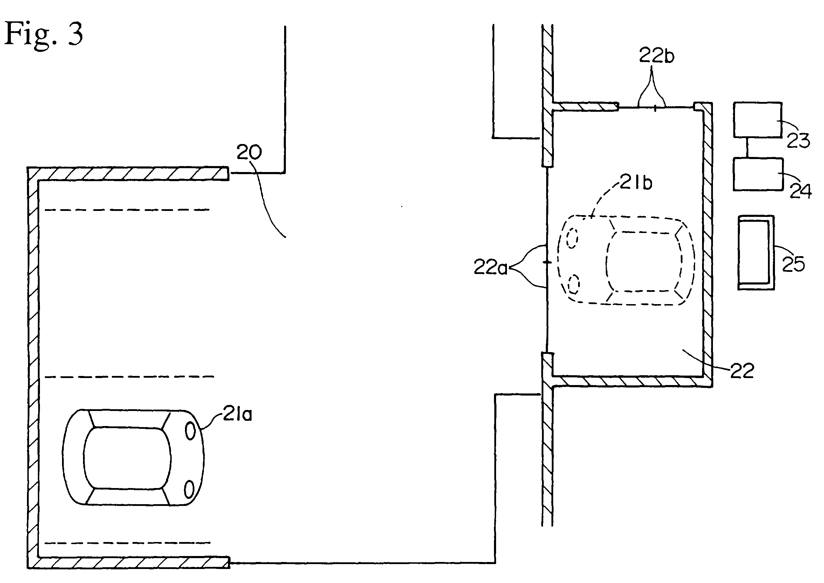

The vehicle port at the hotel 1 will now be explained with reference to the figures. FIG. 3 is an illustration which shows the construction of the vehicle port at the hotel 1. The vehicle port comprises a car park 20, a vehicle pick-up space 22, an APS 23, a port terminal 24 and a card processor 25.

In the car park 20, for example an electric vehicle 21a and an electric vehicle 21b being shared vehicles, are parked. Into the vehicle pick-up space 22 is guided for example, the electric vehicle 21b from the car park 20 under control of the APS 23, based on the rental processing of the user in the port terminal 24. At this time, an automatic door 22a controlled by the APS 23, opens and closes as the electric vehicle enters.

Here, the rental information of the user in the port terminal 24 is sent to the central control apparatus via the LAN (not shown in the figures). Furthermore, the port terminal 24, based on the input rental information of the shared vehicle (the electric vehicle 21b), instructs the APS 23 to guide the electric vehicle 21b. Here, the user enters the vehicle pick-up space 22 when the automatic door 22b, which is opened and closed by control of the APS 23, is opened, and gets into the electric vehicle 22b.

The card processor 25 is operated by the card processor operator to perform the IC card issue processing and IC card return processing. Furthermore, the card processor 25 calculates the charges for the user when the IC card return is processed.

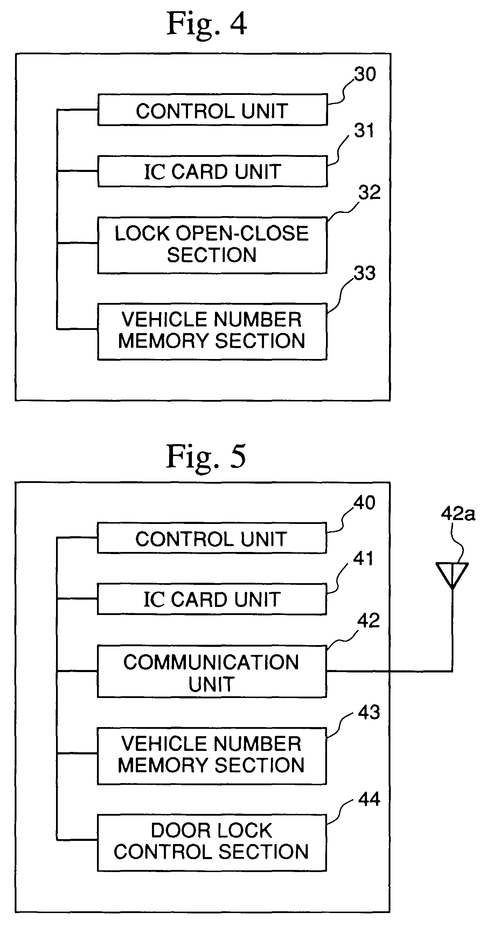

FIG. 4 shows a block diagram of the control system for the cycles 11 shown in FIG. 2. A control unit 30, which comprises a CPU and a memory device, controls the activity of the whole control system according to a program stored in the memory device. An IC card unit 31 reads data DA for the vehicle numbers stored in the memory region of an IC card, and sends the read data DA to the control unit 30.

Furthermore, the control unit 30 judges whether the data DA for the vehicle numbers stored in a vehicle number memory section 33 corresponds to data DB for vehicle numbers stored in the memory region in the IC card inserted by the user. If the data DA corresponds to the data DB, the control unit 30 outputs a lock release signal to a lock open-close section 32 to enable renting the cycle 11. On the other hand, if the data DA does not correspond to the data DB, the control unit 30 does not output a control signal. Therefore, the control unit 30 does not release the lock of the cycle 11 so that the cycle 11 cannot be rented.

FIG. 5 shows a block diagram of the control system for the electric vehicle 6a and electric vehicle 6b shown in FIG. 2. A control unit 40, which comprises a CPU and a memory device, controls the activity of the whole control system according to a program stored in the memory device.

When an IC card is inserted, an IC card unit 41 provided at the door of an electric vehicle 6a, reads data DC for vehicle numbers stored in the memory region of the IC card, and outputs the read data DC to the control unit 40.

Furthermore, the control unit 40 judges whether the data DC for the vehicle numbers stored in the vehicle number memory section 43 corresponds to data DD for vehicle numbers stored in the memory region in the IC card inserted by the user. As a result, in the case when the data DC corresponds to the data DD, the control unit 40 outputs a door lock release signal to a door lock control section 44. The door lock control section 44 releases the door lock according to the input door lock release signal. Therefore the door of the electric vehicle 6a can be opened and closed.

An IC card reader (not shown in the figures) installed inside the shared vehicle 6a, when detected that an IC card is inserted, outputs a detect signal to the control unit 40 indicating that IC card insertion has been detected.

Furthermore, the control unit 40, according to the detect signal input from the IC card reader, starts supplying the necessary power to drive the electric vehicle 6a, thereby enabling the electric vehicle 6a to run.

A communication unit 42 transmits data indicating the present location of the electric vehicle 6a and the electric vehicle 6b to the central control apparatus and the port terminals, from an antenna 42a. The communication unit 42 receives, via the antenna 42a, the control data related to motion control of each electric vehicle by the APS provided at each port terminal, and outputs the received control data to the control unit 40. The control unit 40, according to the input control data, controls the driving motor, the brake and the steering control (not shown in the figures) to run the electric vehicles.

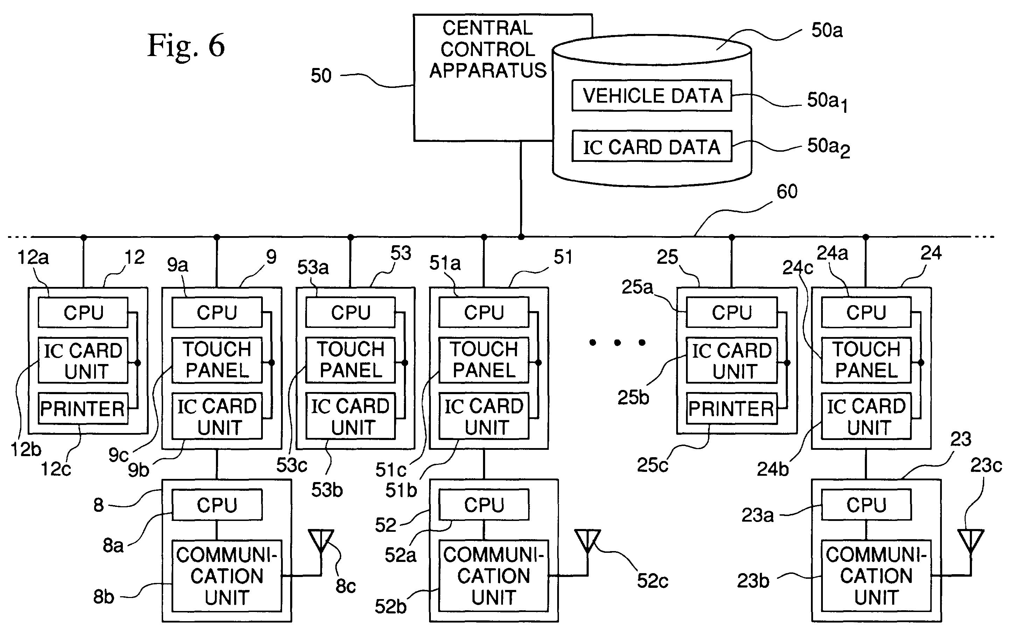

FIG. 6 is a block diagram which shows the connection between a central control apparatus 50, the port terminal 9, the port terminal 24, a port terminal 51, a port terminal 53, the card processor 12, the card processor 25, the APS 8, the APS 23 and an APS 52, in the leisure facilities shown in FIG. 1.

In the figure, the central control apparatus 50, the port terminal 9, the port terminal 24, the port terminal 51, the port terminal 53, the card processor 12, the card processor 25, the APS 8, the APS 23 and the APS 52 are each linked via a LAN 60.

Here, the central control apparatus 50, the card processor 25, the port terminal 24 and the APS 23 are provided inside the hotel 1 in FIG 1. Furthermore, the card processor 12 is provided in the amusement facility 2, and the APS 8 and the port terminal 9 are provided in the vehicle port 2a at the amusement facility 2. Moreover, the port terminal 51 and the APS 52 are provided in the vehicle port 4a at the circuit 4, and the port terminal 53 is provided in the vehicle port 4b at the circuit 4. In FIG. 6, some card processors and port terminals which are linked to the LAN 60, are omitted due to lack of space on the page.

In FIG. 6, the central control apparatus 50 supervises the usage status of electric vehicles (vehicle type shown as "4R") and cycles (vehicle type shown as "2R"), being shared vehicles, and the shared vehicle usage status of the IC card users. Therefore, the central control apparatus 50 is provided with a database 50a which includes a memory region 50a1 for storing vehicle data showing the shared vehicle usage status, and a memory region 50a2 for staring IC card data showing the shared vehicle usage status of the users.

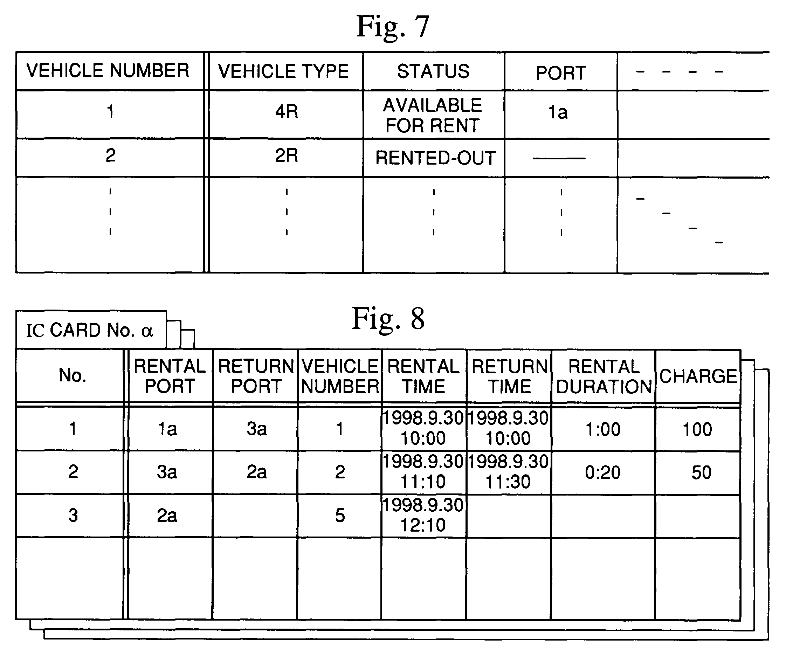

The memory region 50a1 stores, in the format shown in FIG. 7, the usage status data for a plurality of shared vehicles for supervision in the central control apparatus 50. That is to say, the memory region 50a1 stores, corresponding to the vehicle number of the shared vehicle, the vehicle type data, the vehicle availability data showing whether the shared vehicle is available or not, and if available, the vehicle port data showing in which vehicle port this is parked.

For example, the memory region 50a1 stores; the vehicle type data "4R" showing that shared vehicle number 1 is an electric vehicle, the usage status data "Available for rent", and the vehicle port number data "1a" showing that the vehicle is currently parked in the vehicle port 1a (FIG. 1). Furthermore, the memory region 50a1 stores; vehicle type data "2R" showing that shared vehicle number "2" is a cycle, the usage status data "Rented-out", and the vehicle port number data "-" showing that the vehicle has been rented and is not parked in any vehicle port.

The memory region 50a2 stores in the format shown in FIG. 8, a plurality of data for rental and returning status for each of the IC cards, which is issued by a card processor in the leisure facilities and supervised by the central control apparatus 50, that is to say, data for the shared vehicle usage status of the user holding the issued IC card.

That is, the memory region 50a2, corresponding to an IC card number stores; data for numbers showing the usage order of the shared vehicle, rental port data showing at which vehicle port the shared vehicle was rented, return port data showing at which vehicle port the shared vehicle was returned, data showing the vehicle number of the used shared vehicle, rental time data showing when the shared vehicle was rented, returned time data showing when the shared vehicle was returned, rental duration data showing how long the vehicle was used, and the charge showing the fee based on the shared vehicle type and rental duration.

For example, FIG. 8 shows the shared vehicle usage status for an IC card user whose IC card number is indicated by IC card number data "α". The data stored in the memory region 50a2 shows that on the first time use, the shared vehicle was rented at vehicle port 1a (FIG. 1), the shared vehicle was returned to vehicle port 3a (FIG. 1) and the vehicle number of the rented shared vehicle was "1". Furthermore, the memory region 50a2 shows that on the first time use, the shared vehicle rental time was "10:00, September 30, 1998", the shared vehicle return time was "11:00, September 30, 1998", the rental duration was "1:00" and the charge was "100".

Similarly, on the second time use, the data stored in the memory region 50a2 shows that the shared vehicle was rented at vehicle port 3a (FIG. 1), the shared vehicle was returned to the vehicle port 2a (FIG. 1), and the vehicle number of the rented shared vehicle was "2". Furthermore, the memory region 50a2 shows that on the second time use, the shared vehicle rental time was "11:10, September 30, 1998", the shared vehicle return time was "11:30, September 30, 1998", the rental duration was "0:20" and the charge was "50".

Furthermore, on the third time use, the data stored in the memory region 50a2 shows that the shared vehicle was rented at vehicle port 2a (FIG. 1), is currently in use, and the vehicle number of the rented shared vehicle is "5". Moreover, the memory region 50a2 shows that on the third time use, the shared vehicle rental time was "12:10, September 30, 1998".

In FIG. 6, the card processor 12 comprises a CPU 12a, an IC card unit 12b and a printer 12c. The CPU 12a controls the IC card unit 12b and the printer 12c according to a program stored in the memory section of the card processor 12 (not shown in the figures).

When an IC card is issued, the IC card unit 12b writes to the memory section of the IC card, the IC card number data input from the CPU 12a, being data showing the reference number of the IC card, and the personal data of the user.

Then when the IC card is returned, the IC card unit 12b outputs the data such as the IC card number data to the CPU 12a.

Moreover, the CPU 12a accesses the IC card data stored in the memory region 50a2 in the central control apparatus 50, based on the IC card number data input from the IC card unit 12b. In addition, the CPU 12a calculates the charges based on the data related to the used shared vehicle in the IC card data read from the memory region 50a2.

The printer 12c prints the data input from the CPU 12a, for example, receipts for the usage charge for the result of the account settlement by the CPU 12a. Furthermore, the CPU 12a outputs the data showing that the IC card has been returned, to the central control apparatus 50.

Moreover, the card processor 25 has the same functions as the above-mentioned card processor 12. A CPU 25a, an IC card unit 25b and a printer 25c constituting the card processor 25 are respectively constructed the same as the CPU 12a, the IC card unit 12b and the printer 12c, constituting the card processor 12, and hence description thereof is omitted.

The port terminal 9 comprises a CPU 9a, an IC Card Unit 9b and a touch panel 9c. The CPU 9a controls the IC Card Unit 9b and the touch panel 9c according to a program stored in a memory section (not shown in the figures) of the port terminal 9.

The IC card unit 9b, detects that a user has inserted an IC card, reads the IC card data stored in the memory section of the IC card, and then outputs the data for the read IC card number to the CPU 9. Furthermore, the CPU 9a queries the central control apparatus 50 using this data for the IC card number to judge if the IC card user is currently using a shared vehicle.

Here, when it is judged that a shared vehicle is not being used from the usage status data, the CPU 9 outputs a request signal requesting the central control apparatus 50 to retrieve, from among the shared vehicle numbers in the memory region 50a1, the vehicle number of a shared vehicle available at the vehicle port in which this port terminal is provided. Furthermore, the IC card unit 9b writes in the memory section of the IC card, the data for the vehicle number of the rental shared vehicle input from the central control apparatus 50 via the CPU 9.

On the other hand, when judged that a shared vehicle is being used, the CPU 9a performs the return processing for the shared vehicle. That is to say, the CPU 9a outputs the IC card number data read from the IC card by the IC card unit 9b, to the central control apparatus 50 and also outputs a request signal to the central control apparatus 50 to write the shared vehicle return port and the returned time in the region corresponding to the IC card number in the memory region 50a1.

The touch panel 9c displays image data for operating instructions for shared vehicle rental and return under the control of the CPU 9a. Furthermore, the touch panel 9c inputs data by being touched on the displayed image by a finger or the like, in the processing for the rental and return, and outputs this input data to the CPU 9a.

Moreover, the port terminal 24, the port terminal 51 and the port terminal 53 have the same functions as the above-mentioned port terminal 9. A CPU 24a, an IC card unit 24b and a touch panel 24c constituting the port terminal 24 are respectively constructed the same as the CPU 9a, the IC card unit 9b and the touch panel 9c constituting the port terminal 9, and hence description thereof is omitted.

Similarly, a CPU 51a, an IC card unit 51b and a touch panel 51c constituting the port terminal 51, are respectively constructed the same as the CPU 9a, the IC card unit 9b and the touch panel 9c constituting the port terminal 9, and hence description thereof is omitted.

Furthermore, similarly, a CPU 53a, an IC card unit 53b and a touch panel 53c constituting the port terminal 51 are respectively constructed the same as the CPU 9a, the IC card unit 9b and the touch panel 9c constituting the port terminal 9, and hence description thereof is omitted.

The APS 8 comprises a CPU 8a and a communication unit 8b. The CPU 8a controls the communication unit 8b according to a program stored in the memory section (not shown in the figures) of the APS 8.

The communication unit 8b communicates with the communication unit 42 (FIG. 5) installed in the electric vehicles, for example, the electric vehicle 6a (FIG. 2) through an antenna 8c. That is to say, the communication unit 8b, though antenna 8c, sends a control signal from the APS 8 to move the electric vehicle 6a without a driver.

Here, the communication unit 42 in the electric vehicle 6a receives the control signal sent by the communication unit 8b through the antenna 42a, and outputs the received control signal to the control unit 40 (FIG. 3). The control unit 40, based on the input control signal, when the user is to get into the electric vehicle 6a, guides the electric vehicle 6a to the predetermined vehicle pick-up point from, for example, the car park 20 (FIG. 3) in the vehicle port 1a (FIG. 1), and after the user has alighted from of the electric vehicle 6a, moves the electric vehicle 6a to the vehicle port 4b from the predetermined vehicle drop-off point.

Furthermore, the communication unit 8b receives, through the antenna 8c, a response signal from the communication unit 42 in the electric vehicle 6a for the output control signal, and outputs this response signal to the CPU 8a. The CPU 8a guides the electric vehicle 6a based on this response signal.

Moreover, the APS 23 and the APS 52 have the same functions as the above-mentioned APS 8. A CPU 23a and a communication unit 23b constituting the APS 23 are respectively constructed the same as the CPU 8a and the communication unit 8b constituting the APS 8, and hence description thereof is omitted.

Similarly, a CPU 52a and a communication unit 52b constituting the APS 52 are respectively constructed the same as the CPU 8a and the communication unit 8b constituting the APS 8, and hence description thereof is omitted.

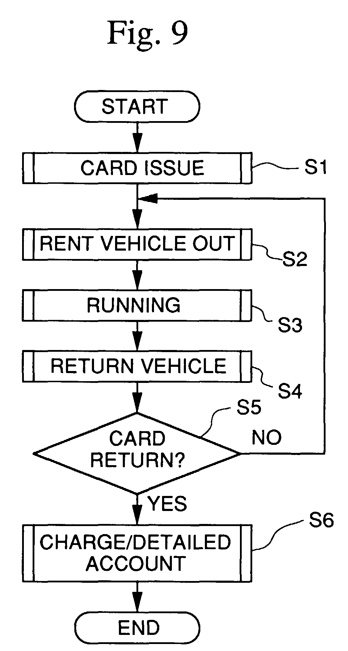

An operating example of the above-mentioned vehicle sharing system will now be explained with reference to FIG. 6 and FIG. 9. FIG. 9 is a flowchart showing the flow from issue to return of an IC card. For example, the user is issued with an IC card by the card processor 25 inside the hotel 1 (FIG. 1), for rental and return of the shared vehicle.

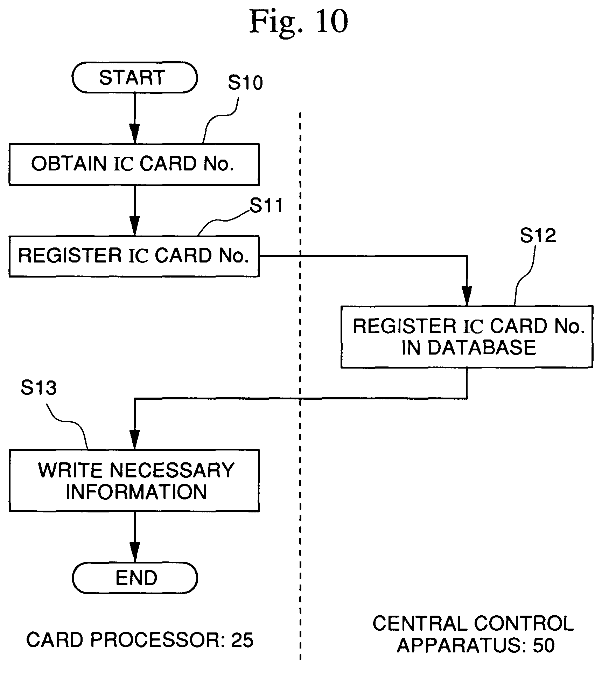

In step S1, the IC card issue processing is performed according to the flowchart shown in FIG. 10.

In step S10, the user enters the necessary items in a shared vehicle application form, and submits it to the operator of the card processor 25. Accordingly, the operator of the card processor 25, based on the necessary items entered in the application form, inputs the necessary item data using a keyboard (not shown in figures) into the card processor 25. Alternatively, the operator uses a card reader (not shown in figures) to read the necessary item data and input the data into the card processor 25.

Then, the CPU 9a outputs the IC card number for the IC card being issued, to the central control apparatus 50 via the LAN 60, and requests confirmation of whether the IC card number is available or not. At this time, if detected that the card number is not duplicated in the registered card numbers stored in the memory 50a2, the central control apparatus 50 outputs a confirmation signal to the CPU 25a. As a result, the CPU 25a completes obtaining an IC card number for the IC card being issued.

In step S11, the CPU 25a outputs the obtained IC card number to the central control apparatus 50 as a register signal in order to register the number as the IC card number of the IC card being issued.

In step S12, the central control apparatus 50, based on the register signal input from the CPU 25a, stores the IC card number of the IC card that the card processor 25 is to issue to the user, to the memory region 50a2. Accordingly, the central control apparatus 50 completes registering of the IC card number of the IC card to the database 50a. Then the central control apparatus 50 outputs a register-completed signal showing that registering to the CPU 25a is completed.

In step S13, the CPU 25a, when the register-completed signal is input from the central control apparatus 50, displays an image showing that registering to the central control apparatus 50 is completed, on a display (not shown in the figures) of the card processor 25. Accordingly, the operator inserts a new IC card into the IC card unit 25b and gives a command to the CPU 25a to write the data to the IC card, using a keyboard (not shown in the figures).

Then, the CPU 25a, after receiving this command, writes the IC card number data of the IC card and the data of the necessary items written in the IC card application form into the memory region of the IC card using the IC card unit 25b. Accordingly, the IC card issue processing at the card processor 25 is completed. Then the operator retrieves the IC card from the IC card unit 25b and hands this IC card to the user. As a result, step S13 is completed and control returns to step S1 of the flowchart in FIG. 9.

Next, in step S2, the user performs the rental processing for the shared vehicle at the port terminal 24, using the IC card issued in step S1.

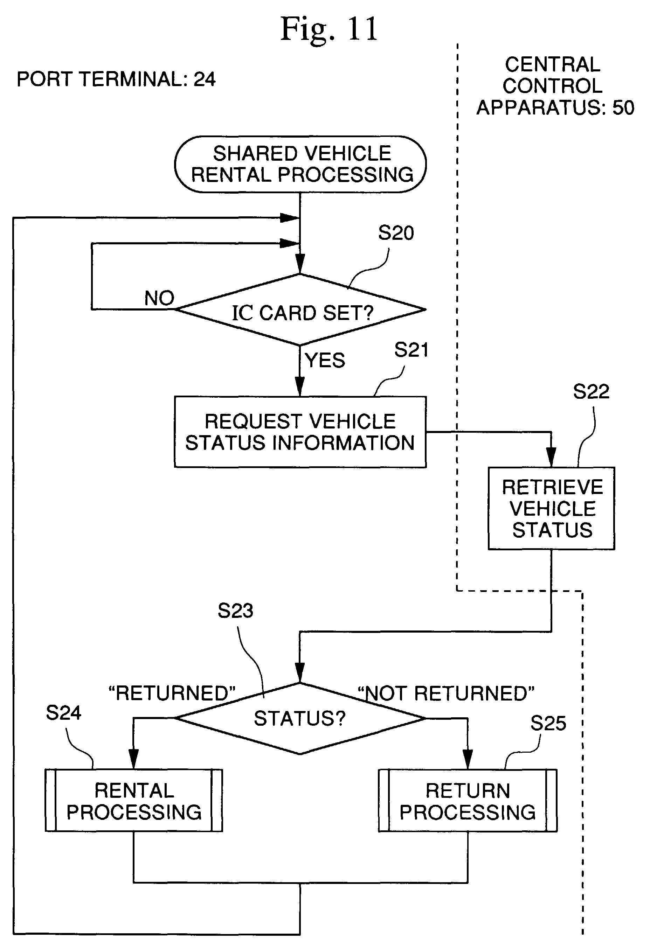

In step S2, the rental processing for the shared vehicle is performed according to the flowchart shown in FIG. 11.

In step S20, the CPU 24a detects whether the IC card is inserted in the IC card unit 24b. When the user inserts the IC card in the IC card unit 24b, the IC card unit 24b outputs a detect signal showing that the IC card is inserted, to the CPU 24a. Then the CPU 24a, through the detect signal, detects that the IC card is inserted in the IC card unit 24b, and control proceeds to step S21.

Alternatively, if the user does not insert the IC card into the IC card unit 24a, the IC card unit 24a does not output a detect signal to the CPU 24a. As a result, the CPU 24a judges that an IC card is not inserted in the IC card unit 24b, and repeats the processing of step S20.

Then, in step S21 the CPU 24a reads the IC card number stored in the IC card memory region from the IC card unit 24b and confirms the shared vehicle usage status for the user who possesses this IC card. That is to say, the CPU 24a outputs a request signal along with the IC card number data to the central control apparatus 50, and queries the central control apparatus 50 to confirm the shared vehicle usage status.

Next, in step S22 the central control apparatus 50, receiving this request signal, retrieves the data from the memory 50a2 in database 50a. That is to say, the central control apparatus 50 retrieves the shared vehicle usage status for the user who possesses the IC card with this IC card number, from the IC card data stored in the memory region 50a2. Then, the central control apparatus 50 outputs the retrieved data to the CPU 24a.

Here, if in the retrieved data, the last rental in the data form shown in FIG. 8 has return vehicle port data corresponding to the rental vehicle port data, the central control apparatus 50 judges that the shared vehicle has been returned. On the other hand, if the last rental in the data form shown in FIG. 8 has no return vehicle port data corresponding to the rental vehicle port data, the central control apparatus 50 judges that the shared vehicle has not been returned.

Then, the central control apparatus 50, based on the IC card number of the IC card, and as a result of the data retrieval for the shared vehicle usage status of the IC card user, outputs the status data indicating the shared vehicle usage status of the user to the CPU 24a. For example, when the IC card user is using a shared vehicle, the status data is "1". Alternatively, when the IC card user is not using a shared vehicle, the status data is "0".

Next, in step S23 the CPU 24a, based on the status data input from the central control apparatus 50, judges the shared vehicle usage status of the IC card user. At this time, the CPU 24a, if the status data is "0", judges that the user has returned the shared vehicle, and proceeds to step S24 to perform the rental processing.

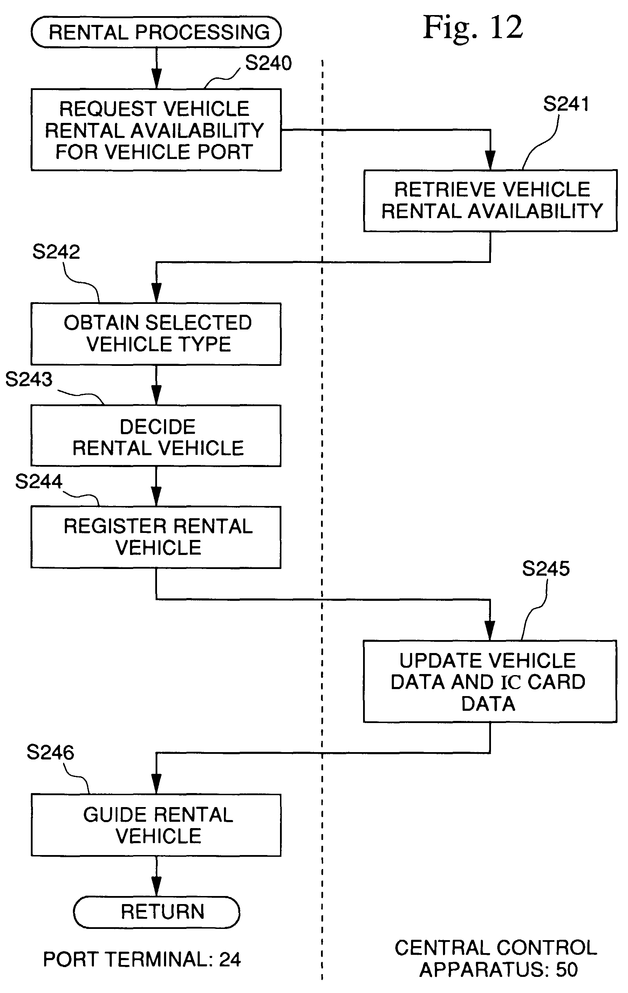

Here, in step S24, control proceeds according to the flowchart shown in FIG. 12.

In step S240, the CPU 24a outputs a retrieval request signal to the central control apparatus 50 requesting the retrieval of data for the shared vehicles available for rental at the vehicle port 1a (FIG. 1) provided in the hotel 1.

Then, in step S241 the central control apparatus 50 receives the retrieval request signal input from the CPU 24a, and retrieves data for the shared vehicles available for rental by the user at the vehicle port 1a from the vehicle data shown in FIG. 7 and stored in the memory region 50a1 of the data base 50a. At this time, since the vehicle port 1a is a vehicle port for the exclusive use of electric vehicles and therefore only vehicle type "4R" can be rented, the central control apparatus 50 retrieves the vehicle type "4R".

As a result, the central control apparatus 50 detects that, in the vehicle port 1a, the shared vehicle No. 1 is available for renting to the user. Accordingly, the central control apparatus 50 outputs a rental available signal to the CPU 24a indicating that shared vehicle No. 1 is available for rental at the vehicle port 1a.

Then, in step S242 the CPU 24a, based on the rental available signal received from the central control apparatus 50, detects that shared vehicle No. 1 of vehicle type "4R" is available for renting to the user. As mentioned above, the vehicle port 1a is a vehicle port for the exclusive use of electric vehicles, therefore the available vehicle type is forcefully limited to electric vehicles of vehicle type "4R".

Next, in step S243 the CPU 24a makes the electric vehicle for renting to the user the vehicle No. 1.

Then, in step S244 the CPU 24a outputs the data indicating that the electric vehicle No. 1 of vehicle type "4R" is to be rented to the user from the vehicle port 1a, and also data of the IC card number of the IC card, as a rental signal to the central control apparatus 50. Then the CPU 24a, through the IC card unit 24b, writes the data for the vehicle number of the electric vehicle No. 1 to be rented, to the memory region of the IC card.

In step S244, the central control apparatus 50 receives the data input from the CPU 24a indicating that the electric vehicle No. 1 is to be rented to the user, and the data of the IC card number, and updates the memory data in the database 50a. That is to say, the central control apparatus 50 changes the status data of the vehicle No. 1 stored in the memory region 50a1 of the database 50a, from "Available for rent" to "Rented-out".

Furthermore, in the memory region corresponding to the IC card number of the IC card of the user, for example IC card number "α", the central control apparatus 50 writes the number of times of use to the usage number field, for example "4" indicating that this is the fourth time. Moreover, the central control apparatus 50 writes "1a" into the rental port field to indicate that the shared vehicle was rented at the vehicle port 1a.

Furthermore, the central control apparatus 50 writes "1" into the vehicle number field to indicate that vehicle No. 1 is rented. Moreover, the central control apparatus 50 writes the present time data into the rental time field. Then, the central control apparatus 50 outputs a completed signal to the CPU 24a indicating that updating the data in the database 50a is completed.

Next, in step S256 the CPU 24a, by the completed signal received from the central control apparatus 50, displays an image showing for example, "Rental processing is completed. Please remove your IC card." or the like on the touch panel 24c. Accordingly, the user, confirming the image display on the touch panel 24c, removes the IC card from the IC card unit 24b. Then the user moves to the predetermined vehicle pick up point and waits for the electric vehicle No. 1 to be guided and stop there.

The electric vehicle No. 1 for rental by the user is then guided to the pick-up space. Here vehicle No. 1 is, for example, the electric vehicle 21a shown in FIG. 3. The CPU 24a outputs to the APS 23, an instruction signal instructing the electric vehicle 21a to move to the vehicle pick-up space 22 from the car park 20. Accordingly the CPU 23a, by the instruction signal received from the CPU 24a, outputs a control signal to the electric vehicle 21a via the communication unit 23b to guide the electric vehicle 21a to the vehicle pick-up space 22.

The electric vehicle 21a receives this control signal with the communication unit 42 (FIG. 5) and outputs the received control signal to the control unit 40 (FIG. 5). Accordingly, the control unit 40 guides the electric vehicle 21a to the vehicle pick-up space 22. At this time, the APS 23, detecting that the electric vehicle 21a has approached the automatic door 22a, opens the automatic door 22a. Furthermore, the APS 23 keeps the automatic door 22b by which the user enters the vehicle pick-up space from the vehicle pick-up entrance, closed until the electric vehicle 21a stops in the vehicle pick-up space 22.

The APS 23, when it detects that the electric vehicle 21a has stopped, displays an image on the touch panel 24c indicating that it is permissible to enter the vehicle pick-up space 22, and opens the automatic door 22b to let the user enter the vehicle pick-up space 22.

Next, the user inserts the IC card into the IC card unit 41 provided at the door of the electric vehicle 21a. Then the control unit 40 judges whether the vehicle number stored in the IC card memory region read by the IC card unit 41 and the vehicle number stored in the vehicle number memory section 43 (FIG. 5) are the same or not.

As a result of this judgment, the control unit 40 confirms that the vehicle number stored in the IC card memory region and the vehicle number stored in the vehicle number memory section 43 (FIG. 5) are the same. Accordingly, the control unit 40 outputs a door lock release signal to enable opening and closing of the door. Then the user opens the door, gets in the electric vehicle 21a, inserts the IC card into the IC card reader (not shown in the figures), turns on the ignition (not shown in the figures), moves the shift lever forward, presses the accelerator (not shown in the figures) and starts operating the electric vehicle 21a. The user then closes the door of the electric vehicle 21a and starts driving the electric vehicle 21a. Accordingly, the shared vehicle rental processing is completed. Control then returns to step S20 shown in FIG. 11 and the CPU 24a repeats the processing of step S20 until the next IC card is inserted.

Furthermore in step S23, the CPU 24a, in the case when the status data input from the central control apparatus 50 is "1" indicating "Not Returned", detects that the user has rented and not returned the shared vehicle, and proceeds to step S25 for the return processing.

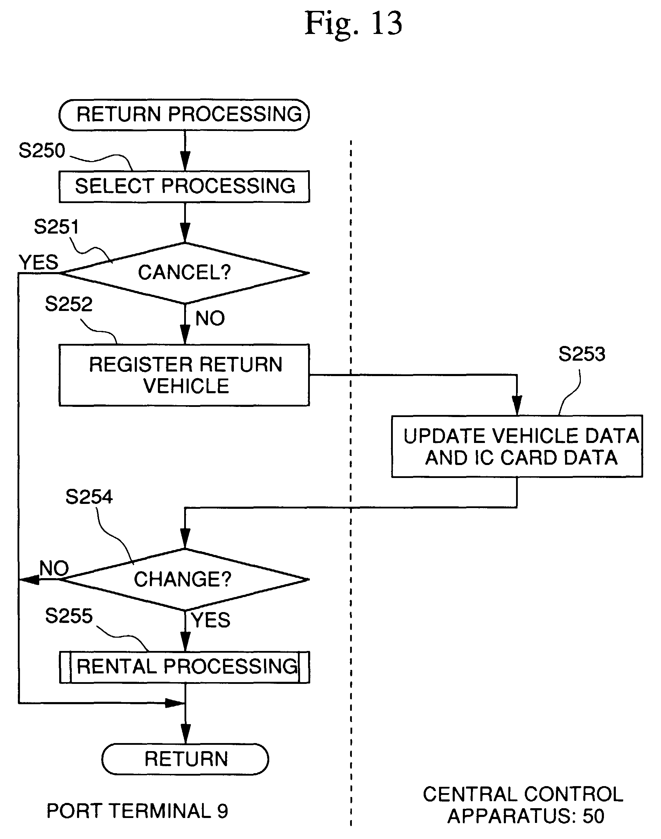

Here, in step S23 the processing is performed following the flowchart shown in FIG. 13. For example, the following is an explanation of the return processing performed by the port terminal 9 at the vehicle port 2a. The user has already inserted his IC card into the IC card unit 9b of the port terminal 9.

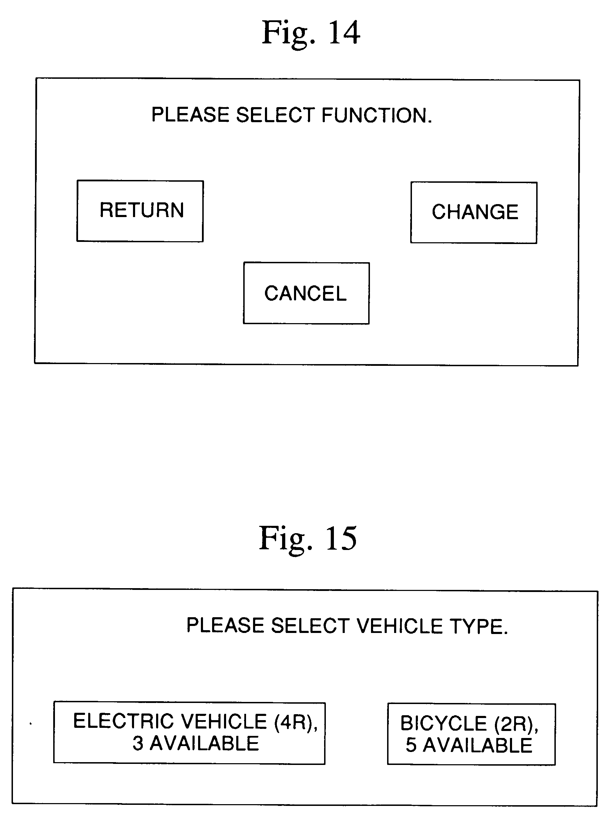

In step S250, the CPU 9a displays an image, for example the image shown in FIG 14, on the touch panel 9c for the user to select an operation. Then the data selected by the user touching the displayed image on the touch panel 9c with a finger or the like, is output to the CPU 9a.

Next, in step S251 the CPU 9a, based on the selected data input from the touch panel 9c, judges the type of operation selected by the user.

That is to say, by the user touching on the image display "Cancel" (FIG. 14) on the touch panel 9c with a finger or the like, the CPU 9 determines that the user has selected an operation to cancel the return processing, and cancels the return processing.

On the other hand, in step S250 in FIG. 13, the user may touch the image display (FIG. 14) for either "Return" or "Change" on the touch panel 9c with a finger or the like.

At this time, in step S251 the CPU 9a detects that the user has selected the return processing for the shared vehicle that is currently rented. Accordingly, the CPU 9a advances the processing to the step S252.

Then, in step S252 the CPU 9a outputs a request signal requesting to update the data of the returning shared vehicle in the database 50a. At this time, with the request signal, the CPU 9a outputs the data for the IC card number read from the IC card by the IC card unit 9b, to the central control apparatus 50.

Next, in step S253 the central control apparatus 50, based on the request signal received from the CPU 9a, updates the data in the database 50a for the IC card number data received with this request signal.

That is to say, in the memory region corresponding to the input IC card number of the IC card of the user, for example IC card number "□", to show at which vehicle port the shared vehicle is returned, the central control apparatus 50 writes, for example, "2a" in the returning port field, since in this case the return processing has been performed at the vehicle port 2a. Furthermore, the central control apparatus 50 writes the present time data in the returned time field. At this time, the central control apparatus 50 calculates the rental duration and the charge for the returned shared vehicle, and updates the IC card data stored in the memory region 50a2.

Then the central control apparatus 50, based on the data for the vehicle number of the shared vehicle rented by the user, for example, the electric vehicle No. 1, changes the shared vehicle status data corresponding to this vehicle number, from "Rented-out" to "Available for rent". Furthermore, the central control apparatus 50 writes "2a" to indicate the vehicle port 2a, into the port field indicating the vehicle port in which the vehicle is currently parked. Accordingly, the central control apparatus 50 completes updating the data stored in the database 50a.

Furthermore, the APS 8, based on a control signal from the CPU 9a, guides the returned electric vehicle No. 1, for example, the electric vehicle 6b to the predetermined location in the car park 5 (FIG. 2) to park. The guiding processing of this returned electric vehicle 6b is the same as the control wherein the APS 23, in the hotel 1, guided the electric vehicle 21b (FIG. 3) to the vehicle pick-up space 22. Therefore the description is omitted. Moreover, the central control apparatus 50 outputs an update completed signal to the CPU 9a indicating that data updating in the database 50a is completed.

Next, in step S254 the CPU 9a, based on the update completed signal received from the central control apparatus 50, judges whether the user is changing shared vehicles, from an electric vehicle to a bicycle (in the vehicle port shown in Fig. 2) or conversely from a bicycle to an electric car, or only returning the vehicle. That is to say, the CPU 9a, in step S250 detects which of the displayed images, namely "Return" or "Change", on the touch panel 9c shown in FIG. 14 the user has selected.

In the case where the user has selected the displayed image "Return", the CPU 9a completes only the return processing, and leaves from the processing of the flowchart shown in FIG. 13.

On the other hand, in the case that the user has selected the displayed image "Change", the CPU 9a proceeds to step S255 of the rental processing.

Step S255 performs the same processing as step S24 in the flowchart of the rental processing, that is to say, the same as the flowchart shown in FIG. 12. Accordingly, description of step S255 is omitted.

However, in the vehicle port 2a (FIG. 2) for which the processing is now being performed, a plurality of vehicle types, electric vehicle 6a, electric vehicle 6b and bicycle 11 may be rented, compared with vehicle port 1a (FIG. 3) in which only electric vehicle 21a and electric vehicle 21b could be rented.

Therefore, in step S242 in the flowchart shown in FIG. 12, the CPU 9a displays the images as shown in FIG. 15 whereby the user selects the vehicle type, on the touch panel 9c. The displayed images show the instruction "Please select vehicle type required.", together with images such as "Electric vehicle" and "Cycle" as the shared vehicle types, as well as the number of each available.

The numbers available are based on the data that, in step S241, the central control apparatus 50 output to the CPU 9a as retrieved from the database 50a.

The selected shared vehicle type that the user wants to use, selected by touching the displayed image indicating the shared vehicle type the user wants to use, with a finger or the like, is input by the CPU 9a from the touch panel 9c. As a result, the CPU 9a obtains the data for the user selected vehicle type.

In step S243, based on the available vehicle numbers for each vehicle type input from the central control apparatus 50, and the selected vehicle type data input from the touch panel 9c by the user, the CPU 9a determines a specific shared vehicle to rent to the user.

In the flow of the above-mentioned processing, when processing of step S255 is completed, control returns to step S2 shown in FIG. 9.

Then, in step S3 the user, for example after renting the electric vehicle 6a as a shared vehicle at the vehicle port 2a provided at the amusement facility 2, heads for the museum 3.

Next, in step S4 the user returns the electric vehicle 6a at the museum 3. A port terminal, an APS and a card processor provided at the vehicle port 3a are respectively the same construction as the port terminal 9, the APS 8 and the card processor 12 provided at the vehicle port at the amusement facility 2.

Here, the shared vehicle return processing in step S4 is the same as the return processing shown in FIG. 13, and hence detailed description thereof is omitted.

In step S250 in FIG. 13, it is assumed the user has selected "Return" from the image as shown in FIG. 14 displayed on the touch panel 9c.

In step S5, the user who has returned the shared vehicle in step S4 selects either to settle their account by returning their IC card, or to rent another shared vehicle to move.

For example, in the case that the user stays at the hotel in the leisure facilities, the user does not return the IC card, so that a shared vehicle can be rented with the IC card on the next day to move inside the amusement facility. Then on the next day, in step S2, the user rents a shared vehicle with the IC card and moves inside the leisure facilities to enjoy various kinds of events.

On the other hand, in the case that the user returns the IC card and settles their account, control proceeds to step S6 for the settlement of their account.

Then, in step S6 the operator of the card processor 12, based on the IC card returned by the user, performs the charge processing for the shared vehicle usage of the user using the card processor 12.

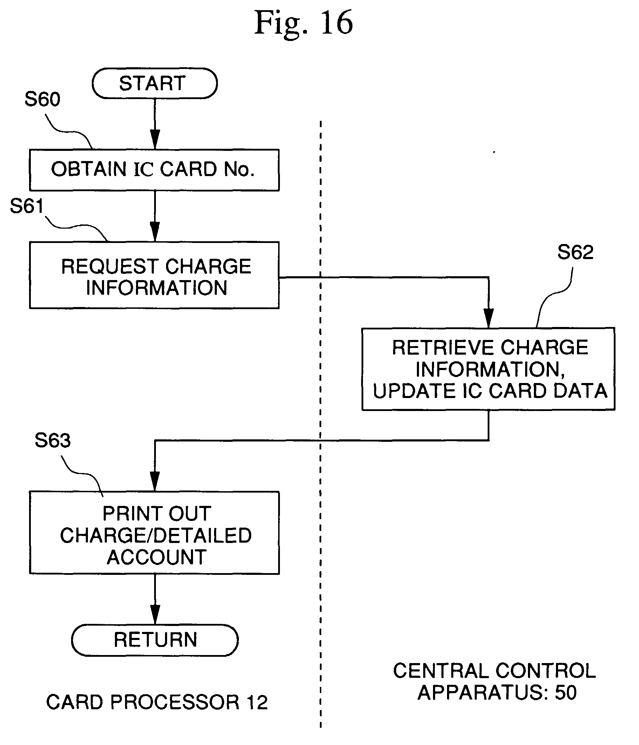

Here in step S6, according to the flowchart shown in FIG. 16, the charge processing for the shared vehicle usage is performed.

In step S60 shown in FIG. 16, the operator of the card processor 12 inserts the IC card returned by the user into the IC card unit 12b. The IC card unit 12b reads the data for the IC card number from the memory region of the inserted IC card, and outputs the read data for the IC card number to the CPU 12a. The operator, on confirming that the CPU 12a has read the IC card data, starts the account settlement processing.

Then, in step S61 the operator of the card processor 12 instructs the CPU 12a to perform the charge processing, using a keyboard (not shown in the figures) for example. Accordingly, the CPU 12a requests retrieval of the charge data in the database 50a for the shared vehicle usage shown in FIG. 8, which is necessary for the charge processing. That is to say, the CPU 12a outputs a charge data request signal requesting retrieval of the charge data from the database 50a, to the central control apparatus 50 together with the data for the IC card number of the IC card.

Next in step S62, based on the charge data request signal and data for the IC card number input from the CPU 12a, the central control apparatus 50a retrieves the IC card data corresponding to the IC card number. Then the central control apparatus 50 outputs all of the resultant charge data stored in the "Charge" field, to the CPU 12a as a result of the charge data retrieval request by the CPU 12a.

After this, the central control apparatus 50 copies the data ranging from the usage record data field through to the charge data field, stored in the memory region 50a2 corresponding to the IC card number for which the charge data was retrieved, to an archive memory region (not shown in the figures), and deletes all the data corresponding to this IC card number from the memory region 50a2.

Next, in step S63 the CPU 12a totals up the usage charges for the shared vehicle by totalization processing for the charge data input from the central control apparatus 50. Then the CPU 12a, as a result of the totalization, prints out the charge as a receipt using the printer 12c. The card processor operator presents this receipt to the user. Accordingly, the user gives the charge printed on the receipt to the operator to settle their account.

The above-mentioned vehicle sharing system has been explained in terms of shared vehicles for leisure facilities. However, application as a city transportation system may reduce the number of private vehicles and enable a reduction in traffic congestion.

Furthermore, it is also possible for a user to apply to the leisure facilities for an IC card issue in advance by mail, electronic mail or the like. Accordingly, compared with applying for a card issue after entering the leisure facilities, the duration for the processing necessary for issuing a card on entering the leisure facilities can be reduced, thus enabling immediate renting of shared vehicles. Therefore, the user can make better use of time after entering the facilities.

Moreover, with the above-mentioned vehicle sharing system, by storing electronic money information in the memory region of the IC card to be used, it is also possible for the user to pay a certain amount of money at the time of issue of the IC card. Accordingly, each time the user uses a shared vehicle, a charge is drawn from the money information stored in the memory region of the IC card. Therefore final settlement of the account is not needed. Then if there is some amount left in the money information stored in the memory region of the IC card, it is also possible for the user to take the card back and use the card again the next time the user enters the leisure facilities.

Furthermore, with the above-mentioned vehicle sharing system, it is also possible to store the charge data for the shared vehicle usage of the user in the memory region of the IC card as well as in the database of the central control apparatus.

In the above, one embodiment of the present invention has been precisely described with reference to the figures. However the specific constructions are not limited to this embodiment, and any design changes and the like which do not depart from the gist of the present invention are to be included in the present invention.

With the present invention an IC card, which is a key to enable the rental of a plurality of kinds of vehicle that can be used in a plurality of vehicle ports is issued to a user prior to the rental of shared vehicles. Therefore, with the vehicle sharing system of the present invention it is possible, by using IC cards, to change between different kinds of shared vehicle as required, in ports where a plurality of kinds of shared vehicle are parked, within a short time and without complicated processing for changing vehicles.

A vehicle sharing system is provided that, in rental places adjacent to various facilities within a leisure facility, enables a user to exchange a plurality of kinds of shared vehicles as required within a short time and without complicated rental processing.

The leisure facilities in which the vehicle sharing system of the present invention is employed comprise; a hotel 1, an amusement facility 2, a museum 3, and a circuit 4. The facilities are scattered over the site with some distance between them. In the hotel 1 a central control apparatus is provided, which supervises the maintenance condition and usage status of shared vehicles collectively. Herein, shared vehicles means those that can be used freely by a plurality of users when not being randomly occupied, without specifying a vehicle for each user. Furthermore, in the neighborhood of each facility are provided vehicle ports in which shared vehicles are to be parked. Herein, vehicle types of shared vehicles that can be parked in each vehicle port are limited dependant on conditions such as the distance between each facility and the width of roads and the like.

## Claims

1. A vehicle sharing system characterized in comprising:
an IC (Integrated Circuit) card that functions as a key for shared vehicles;
a plurality of vehicle ports in different locations that enable parking of one or more kinds of shared vehicle; and
a plurality of kinds of shared vehicles that can be parked in said vehicle ports and that can be rented with said IC card.

2. A vehicle sharing system according to claim 1, wherein said vehicle system further comprises:
port terminals provided in said vehicle ports for performing rental and return processing of shared vehicles by using said IC card; and
a central control apparatus which is network linked to said port terminals, and which obtains information about rental and returning of the shared vehicles performed at said port terminals and stores the usage status of shared vehicles.

3. A vehicle sharing system according to claim 2, wherein information of charges for use of shared vehicles is stored in said IC card or an IC card memory section in said central control apparatus each time the rental or return processing of said shared vehicles is performed at said port terminals, and the charge processing is performed based on the charge information when the IC card is returned.
